# EUROPÄISCHE PATENTSCHRIFT

(11) **EP 0 939 235 B1**
(45) Veröffentlichungstag und Bekanntmachung des Hinweises auf die Patenterteilung: **09.05.2001**
(21) Anmeldenummer: 99103313.5
(22) Anmeldetag: 19.02.1999
(51) Int. Cl.: F16B 25/10, F16B 25/00

(54) **Schraube**
Screw
Vis

(30) Priorität: 25.02.1998 DE 19807926
(43) Veröffentlichungstag der Anmeldung: 01.09.1999
(73) Patentinhaber: Ludwig Hettich & Co., 78713 Schramberg-Sulgen (DE)
(72) Erfinder: Hettich, Ulrich, 78713 Schramberg-Sulgen (DE)
(74) Vertreter: Liesegang, Roland, Dr.-Ing.

(56) Entgegenhaltungen:
- DE-A- 19 525 732
- US-A- 2 263 137
- US-A- 4 874 278
- US-A- 5 015 134

## Beschreibung

Die Erfindung betrifft eine Schraube gemäß dem Oberbegriff des Anspruchs 1.

Bei einer bekannten Schraube dieser Art (JP 5-196 021 A) sind im Spitzenbereich bis zum freien Ende der Schraube sowohl schneidende Rippen als auch das Gewinde gemeinsam vorgesehen.

Bei einer anderen bekannten Schraube ist die Schneide an einem sogenannten Schneidkanal ausgebildet, d. h. an einer Kerbe, die sich über den Spitzenbereich bis in den Schaft der Schraube fortsetzt (DE 295 13 571 U1).

Bekannt ist ferner eine Schraube, welche ausschließlich in der gewindefreien Schraubenspitze einen Reibkantenbereich in Form von mehreren Rippen aufweist, die sich in Richtung der Längsachse der Schraube erstrecken. Der maximale Rippendurchmesser ist größer als der Kerndurchmesser des Schraubenschaftes (DE 195 25 732 A1).

Gewöhnliche Holzschrauben erzeugen insbesondere beim Einschrauben in weiche Hölzer, wie Nadelhölzer, eine Spaltwirkung. Dies gilt besonders bei Schrauben großen Durchmessers. Die in das Holz eindringenden Schrauben verdichten die Holzfasern in Querrichtung zum Faserverlauf an zwei diametral gegenüberliegenden Stellen der Schraube so, daß das Holz häufig aufgespalten wird. Durch den dadurch stark gestörten inneren Verbund des Holzes wird dir Haltekraft der Schraube verringert.

Der Erfindung liegt die Aufgabe zugrunde, die Spaltwirkung von Schrauben insbesondere beim Einsatz in weichen Hölzern zu vermindern und gleichzeitig die Haltekraft der Schraube zu vergrößern.

Zur Lösung dieser Aufgabe dient Patentanspruch 1.
Vorteilhafte Ausgestaltungen der Erfindung sind in den Unteransprüchen angegeben.
Bei der Erfindung wird mit den im Spitzenbereich vorgesehenen Schneiden an den über den Kerndurchmesser vorstehenden Rippen in das Holz an diametral gegenüberliegenden Stellen der Faserverdichtung in die Fasern eingeschnitten und dadurch einer Tendenz zum Spalten des Holzes beim Einschrauben vorgebeugt. Durch das Einschneiden werden die Spaltkräfte des Holzes abgebaut, welche zu einer Verringerung der Haltekraft der Schraube führen könnten.

Das Gewinde im rippenfreien Endabschnitt der Spitze der Schraube sorgt für ein gutes erstes Einziehen der Schraube, insbesondere in Holz, ohne Behinderung durch die Schneidrippen, die erst ab einer gewissen Mindesteindringtiefe in das Holz eines Werkstückes zu wirken beginnen.

Wenngleich im Grenzfall der Neigungswinkel der Rippen bezüglich der Längsachse der Schraube theoretisch gegen Null gehen kann, sind zum Erzielen einer guten Schneidwirkung die Rippen mit den Schneiden vorzugsweise unter einem Neigungswinkel bezüglich der Längsachse der Schraube angeordnet, der dem Betrage nach größer als 5° ist. Die beste Schneidwirkung wird erzielt, wenn die Rippen Linksdrall haben, d. h. beim Einschrauben mit den Schneiden über deren volle Länge greifen. Die Rippenlänge kann am Übergang zwischen Schaft und Spitze enden, sich aber auch darüberhinaus über einen Teil des Schaftes erstrecken. In beiden Fällen ragt die Rippe mit ihrer Höhenerstreckung über den Kerndurchmesser der Schraube hinaus, so daß der über die Rippen gemessene Durchmesser am Übergang zwischen Spitze und Schaftteil stets größer als der Kerndurchmesser ist.

Rippen mit Schneiden gemäß der Erfindung können vorteilhaft auch im Bereich des Gewindeauslaufs zu einem gewindelosen Schaftteil, bzw. zum Kopf hin vorgesehen sein.

Bei der erfindungsgemäßen Schraube ist die Gewindesteigung größer als bei üblichen Holzschrauben. Vorzugsweise liegt der Steigungswinkel des Gewindes im Bereich zwischen 16 und 20°, insbesondere bei etwa 19°.

Die Schraube nach der Erfindung läßt sich ohne Vorbohren in Holz, insbesondere weiches Holz, aber auch in anderes Material wie Spanplattenmaterial einschrauben.

Die Erfindung ist im folgenden anhand schematischer Zeichnungen an Ausfiihrungsbeispielen mit weiteren Einzelheiten näher erläutert. Es zeigen:
- Fig. 1: eine erste Ausführung einer Holzschraube gemäß der Erfindung;
- Fig. 2: einen Ausschnitt bei Z in Fig. 1 in größerem Maßstab;
- Fig. 3: einen Schnitt nach der Linie III-III in Fig. 2;
- Fig. 4: eine mittels Computer hergestellte perspektivische Darstellung des Spitzenbereiches der Schraube nach den Fig. 1 bis 3;
- Fig. 5: eine zweite Ausführung einer Holzschraube nach der Erfindung;
- Fig. 6: eine Einzelheit bei Z in größerem Maßstab der Schraube nach Fig. 5;
- Fig. 7: eine perspektivische, mit Computer erstellte Darstellung des Spitzenbereiches der Schraube nach den Fig. 5 und 6;
- Fig. 8: eine dritte Ausführung einer Schraube gemäß der Erfindung;
- Fig. 9: eine Einzelheit bei Z in Fig. 8 in größerem Maßstab;
- Fig. 10: einen Schnitt nach der Linie X-X in Fig. 9;
- Fig. 11: eine mit Computer erstellte perspektivische Darstellung der Schraube nach den Fig. 8 bis 10;
- Fig. 12: eine Variante bei Y in größerem Maßstab, die bei der Holzschraube nach Fig.1 oder Fig.5 vorgeschen sein kann.

In den Zeichnungen sind für gleiche bzw. funktionsgleiche Elemente der Einfachheit halber durchgehend gleiche Bezugszahlen verwendet.

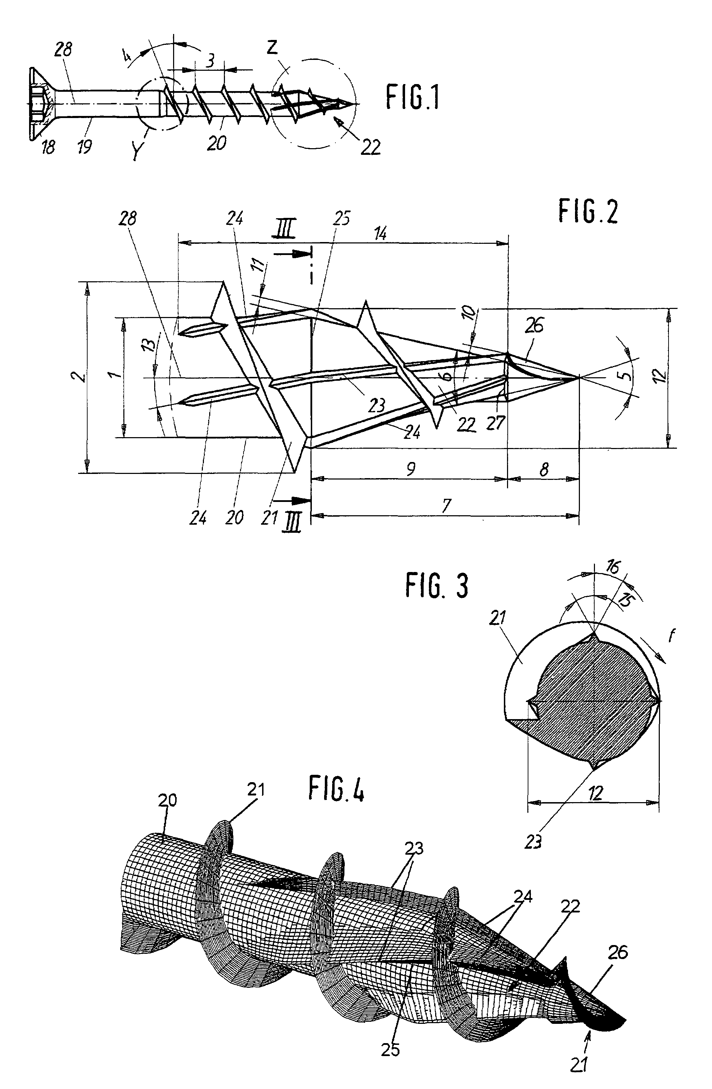

Die in Fig. 1 gezeigte Schraube hat einen Senkkopf 18, einen Schaft mit gewindelosem Schaftteil 19 und mit Gewinde 21 versehenem Schaftteil 20 und eine Spitze 22. Das Gewinde 21 auf dem Schaftteil 20 hat einen Steigungswinkel 4, der zwischen 16° und 20° betragen kann. Bei dem gezeigten Ausführungsbeispiel liegt der Steigungswinkel bei etwa 19°. Dieser Steigungswinkel ist größer als bei üblichen Holzschrauben, wo er 14° bis 15° beträgt.

Die Gewindesteigung 3 des Gewindes nimmt proportional dem Gewindedurchmesser zu. In der Praxis liegt sie beispielsweise bei einem Gewindedurchmesser von 3 mm bei 2,4 mm und bei einem Gewindedurchmesser von 10 mm bei 8 mm.

Über einen Teilabschnitt 9 der Länge 7 der Spitze 22 der Schraube sowie über einen kurzen Abschnitt des Schaftteils 20 erstrecken sich vier parallele Rippen 24, die gleichmäßig um den Umfang verteilt sind und zur Längsachse 10 der Schraube unter einem Neigungswinkel 13 geneigt sind. Der Neigungswinkel 13, der nicht kleiner als 5° sein soll, beträgt bei dem gezeigten Ausführungsbeispiel 10°. Er kann Praxiswerte von bis zu 20° und vorzugsweise um 15° haben und ist vorteilhaft zur Eindrehrichtung hin geneigt (linksgedrallt).

Die Spitze 22 hat einen kegelförmigen Endabschnitt 26, an dessen Fuß 27 die Rippen 24 enden.

Die Länge 8 des kegelförmigen Endabschnittes 26 beträgt etwa 1/3 der Spitzenlänge 7. Der Spitzenwinkel 5 dieses Endabschnittes beträgt vorzugsweise etwa 35°, während der Spitzenwinkel 6 des kegelstumpfförmigen Abschnittes zwischen Fuß 27 und Übergang 25 zum Schaftteil 22 etwa 24° beträgt.

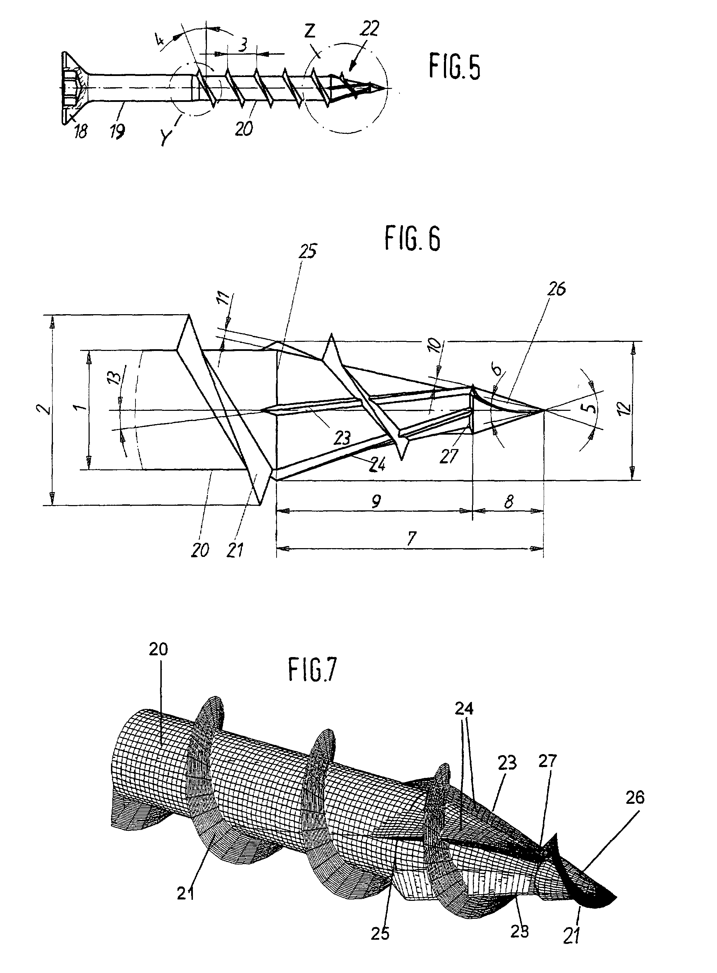

Jede Rippe 24 hat an ihrer Spitze eine Schneide 23. Wie gezeigt und bevorzugt ist die Rippe asymmetrisch gestaltet, d. h. hat Flankenwinkel 15, 16 unterschiedlicher Größe. Bevorzugt ist dabei, wenn die steilere Flanke der Eindrehrichtung (vgl. Drehpfeil f in Fig. 3) zugewandt ist. Aus Fig. 2 ist ersichtlich, daß der maximale Rippendurchmesser 12 am Übergang 25 zwischen Spitze 22 und Schaftteil 20 größer als der Kerndurchmesser 1 der Schraube, jedoch kleiner als der Gewindeaußendurchmesser 2 ist (s. Fig. 5).

Die Rippenlänge 14 ist bei der Schraube nach Fig. 1 gleich der Summe aus der Länge des Teilabschnitts 9 und 2 x der Steigung 3 des Gewindes.

Der Spitzenwinkel 6 der Spitze 22 schließlich beträgt bei dem gezeigten Ausführungsbeispiel 24°.

Die Schraube der zweiten Ausführung nach den Fig. 5 bis 7 unterscheidet sich in Folgender Hinsicht von derjenigen nach der Schraube gemäß den Fig. 1 bis 4:

Die Rippen 24 mit den Schneiden 23 enden am Übergang 25 zwischen Schaftteil 20 und Spitze 22.

Die Rippenlänge entspricht bei dieser Ausführung der Länge des Teilabschnitts 9, vorzugsweise etwa 2/3 der Spitzenlänge 7.

Im übrigen stimmt die Schraube nach den Figuren 5 bis 7 mit derjenigen nach den Fig. 1 bis 4 überein, so daß sich eine weitere Beschreibung erübrigt.

Bei den beiden Ausführungen nach den Fig. 1 bis 4 und 5 bis 7 sind die Rippen 24 mit den Schneiden 23 linksgedrallt, d.h. zur Eindrehrichtung hin geneigt. Folglich greifen die Schneiden 23 beim Eindrehen der Schraube gleichzeitig auf der ganzen Länge, so daß eine optimale Schneidwirkung erzielt ist.

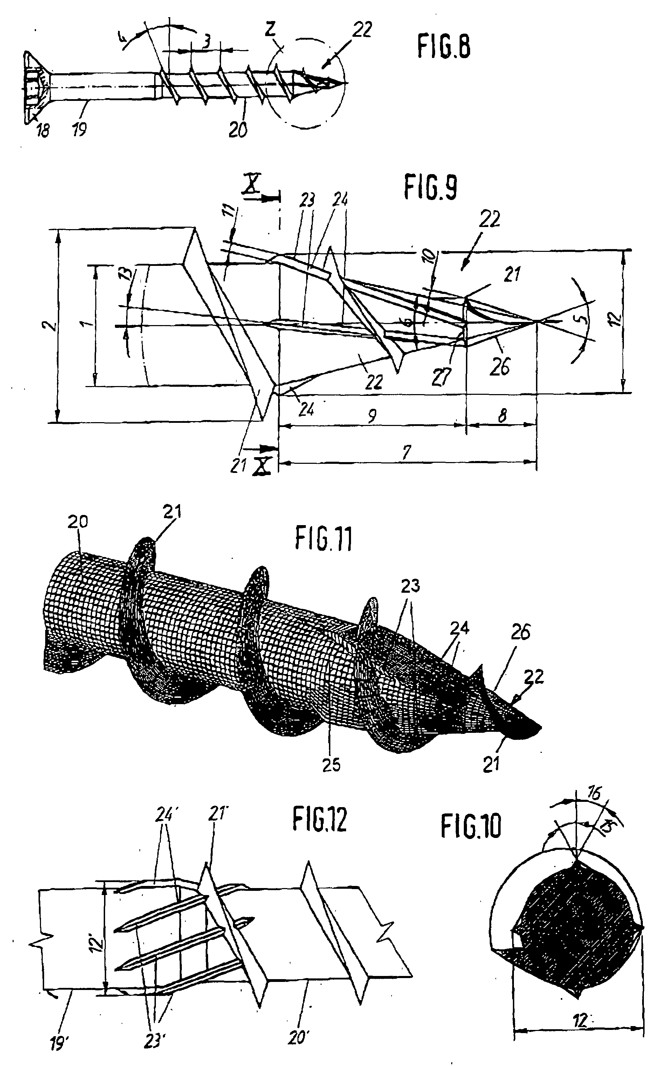

Eine Verringerung der Spaltwirkung wird jedoch auch erzeilt, wenn die Rippen 24 rechtsgedrallt sind. Eine solche Ausführung ist in den Figuren 8 bis 11 gezeigt. Der Neigungswinkel 13 der Rippen 24 zur Längsachse 10 der Schraube beträgt in diesem Fall -10°.

Wie bei der Ausführung nach den Fig. 5 bis 7 reichen die Rippen 24 bis zum Übergang 25 zwischen Spitze 22 und Schaftteil 20.

Im übrigen stimmt die Schraube nach den Fig. 8 bis 11 mit denjenigen nach den Fig. 1 bis 7 überein, so daß sich eine weitere Beschreibung erübrigt.

Eine weitere Ausführung der Erfindung ist in Figur 12 gezeigt. Die Ausbildung dieser Holzschraube im Spitzenbereich ist ähnlich derjenigen nach den Figuren 1 bis 4, wobei jedoch die Rippen 24 wie bei der Ausführung nach den Figuren 5 bis 7 am Übergang 25 zwischen Spitze 22' und Schaftteil 20' enden. Ein Querschnitt an diesem Übergang 25' ist identisch mit dem in Fig. 3 gezeichneten Querschnitt.

Um unnötige Wiederholungen zu vermeiden, wird insoweit auf die Beschreibung nach den Figuren 1 bis 7, insbesondere der Figuren 2, 3 und 6, verwiesen.

Unterschiedlich zu den bisher beschriebenen Ausführungen ist, daß die Holzschraube nach der Figur 12 eine Gruppe Rippen 24' auch im Gewindeauslauf am Übergang zwischen dem Schaftteil 20' und dem gewindelosen, glatten Schaftteil 19' zum Kopf hin aufweist. Die Rippen 19' haben ebenfalls eine Schneide 23' auf ihrem Scheitel und sind im übrigen zur Rippenachse 10 um den gleichen Winkel 13 geneigt wie die Rippen 24 im Spitzenbereich, d. h. beispielsweise unter einem Neigungswinkel 13 von 10° zur Schraubenachse 10.

Der Querschnitt der Rippen 24' ist prinzipiell gleich wie derjenige der Rippen 24. Doch ist der maximale Rippendurchmesser 12' (Fig. 14) größer als Durchmesser des glatten Schaftteiles 19', damit auch die Rippen 24' ihre Schneidwirkung entfalten können. Da der Durchmesser des glatten Schaftteiles 19' fertigungsbedingt größer als der Durchmesser des mit dem gewalzten Gewinde 21' versehenen Schaftteiles 20' ist, ist folglich auch der maximale Rippendurchmesser 12' größer als der maximale Rippendurchmesser 12 der Rippen 24 im Spitzenbereich.

Die zusätzlichen Rippen 24' am Gewindeauslauf bewirken, daß es beim Eindrehen der Schraube nicht zu Hemmungen aufgrund von Reibung zwischen dem glatten Schaftteil 19' mit der Wandung des Bohrloches im Holz kommt.

## Patentansprüche

1. Schraube mit einem Schaftteil (20) und einer kegelförmigen Spitze (22) sowie mindestens einer Schneide (23), wobei sich ein Gewinde (21) mindestens über eine Teillänge des Schaftteiles erstreckt, wobei die Schneide (23) an mindestens einer Rippe (24) ausgebildet ist, die am Schaftteil (20) über den Kerndurchmesser (1) des Schaftteiles (20) vorsteht und einen kleineren Neigungswinkel (13) als das Gewinde (21) zur Längsachse der Schraube hat und wobei sich das Gewinde über die gesamte Länge der Spitze (22) bis zum spitzen Ende der Schraube erstreckt, dadurch **gekennzeichnet,** daß die Rippe (24) mit Schneide (23) sich über einen Teil der Spitze (22) bis zu einem rippenfreien Endabschnitt (26) erstreckt.

2. Schraube nach Anspruch 1, dadurch **gekenneichnet,** daß der Neigungswinkel (13) der oder jeder Rippe (24) gegenüber der Längsachse (10) der Schraube dem Betrage nach größer als 5° ist.

3. Schraube nach Anspruch 2, dadurch **gekennzeichnet,** daß der Neigungswinkel (13) der oder jeder Rippe (24) dem Betrage nach in der Größenordnung von 15° liegt.

4. Schraube nach einem der Ansprüche 1 bis 3, dadurch **gekennzeichnet,** daß die oder jeder Rippe (24) am Übergang (25) zwischen Schaftteil (20) und Spitze (22) endet.

5. Schraube nach einem der Ansprüche 1 bis 3, dadurch **gekennzeich**n e t, daß die oder jeder Rippe (24) sich bis in den Schaftteil (20) über den Übergang (25) zwischen Schaftteil (20) und Spitze (21) hinaus erstreckt.

6. Schraube nach einem der Ansprüche 1 bis 5, dadurch **gekennzeichnet,** daß die Rippe (24) einen Linksdrall aufweist.

7. Schraube nach einem der Ansprüche 1 bis 6, dadurch **gekennzeichnet,** daß zwischen zwei und acht Rippen (24) gleichmäßig um den Umfang verteilt angeordnet sind.

8. Schraube nach einem der Ansprüche 1 bis 7, dadurch **gekennzeichnet**, daß die Rippe (24) im Querschnitt asymmetrisch ist, wobei die Rippenflanke mit dem steileren Flankenwinkel (15) in Eindrehrichtung weist.

9. Schraube nach einem der Ansprüche 1 bis 8, dadurch **gekennzeichnet**, daß der Steigungswinkel (4) des Gewindes (21) im Bereich zwischen 16° und 20° und vorzugsweise bei etwa 19° liegt.

10. Schraube nach einem der Ansprüche 1 bis 9, dadurch **gekennzeichnet,** daß mindestens eine weitere Rippe (24') mit Schneide (23') am Gewindeauslauf zu einem gewindelosen Schaftteil (19) hin vorgesehen ist.

11. Schraube nach Anspruch 10, dadurch **gekennzeichnet,** daß die weitere Rippe (24') gleiche Gestalt und Neigungswinkel (13) wie die Rippe (24) im Spitzenbereich hat.

12. Schraube nach Anspruch 10 oder 11, dadurch **gekennzeichnet**, daß der Durchmesser (12') der weiteren Rippe (24') größer als der Durchmesser (12) der Rippe (24) im Spitzenbereich ist.

## Claims

1. A screw with a shank part (20) and a conical tip (22) and at least one cutting edge (23), a screwthread (21) extending over at least a part of the length of the shank part, the cutting edge (23) being formed on at least one rib (24) projecting at the shank part (20) beyond the core diameter (1) of the shank part (20 and having a smaller angle of inclination (13) than the thread (21) to the longitudinal axis of the screw and the thread extending over the entire length of the tip (22) as far as the pointed end of the screw, characterised in that the rib (24) with the cutting edge (23) extends over a part of the tip (22) as far as an end portion (26) devoid of ribs.

2. A screw according to claim 1, characterised in that the angle of inclination (13) of the or each rib (24) to the longitudinal axis (10) of the screw is larger than 5°.

3. A screw according to claim 2, characterised in that the angle of inclination (13) of the or each rib (24) is of the order of magnitude of 15°.

4. A screw according to any one of claims 1 to 3, characterised in that the or each rib (24) terminates at the transition (25) between the shank part (20) and the tip (22).

5. A screw according to any one of claims 1 to 3, characterised in that the or each rib (24) extends as far as the shank part (20) beyond the transition (25) between the shank part (20) and the tip (21).

6. A screw according to any one of claims 1 to 5, characterised in that the rib (24) has an anticlockwise twist.

7. A screw according to any one of claims 1 to 6, characterised in that between two and eight ribs (24) are distributed uniformly over the periphery.

8. A screw according to any one of claims 1 to 7, characterised in that the rib (24) is asymmetrical in cross-section, the rib flank with the steeper flank angle (15) pointing in the screwing-in direction.

9. A screw according to any one of claims 1 to 8, characterised in that the pitch angle (4) of the screwthread (21) is in the range between 16° and 20° and is preferably about 19°.

10. A screw according to any one of claims 1 to 9, characterised in that at least one other rib (24') with a cutting edge (23') is provided at the thread end towards a non-threaded shank part (19).

11. A screw according to claim 10, characterised in that the other rib (24') has the same shape and angle of inclination (13) as the rib (24) in the tip zone.

12. A screw according to claim 10 or 11, characterised in that the diameter (12') of the other rib (24') is larger than the diameter (12) of the rib (24) in the tip zone.

## Revendications

1. Vis comportant une partie de tige (20) et une pointe de forme conique (22), ainsi qu'au moins une arête de coupe (23), et dans laquelle un filetage (21) s'étend au moins sur une partie de la longueur de la partie formant tige, l'arête de coupe (23) étant formée sur au moins une nervure (24), qui fait saillie sur la partie de tige (20) au-delà de ce qui correspond au diamètre (1) du noyau de la partie de tige (20) et possède un angle d'inclinaison (13) inférieur à celui du filetage (21) par rapport à l'axe longitudinal de la vis, et le filetage s'étend sur toute la longueur de la pointe (22) jusqu'à l'extrémité pointue de la vis, caractérisée en ce que la nervure (24) pourvue de l'arête de coupe (23) s'étend sur une partie de la pointe (22) jusqu'à une partie d'extrémité sans nervure (26).

2. Vis selon la revendication 1, caractérisée en ce que l'angle d'inclinaison (13) de la ou de chaque nervure (24) par rapport à l'axe longitudinal (10) de la vis possède une valeur supérieure à 5°.

3. Vis selon la revendication 2, caractérisée en ce que l'angle d'inclinaison (13) de la ou de chaque nervure (24) possède une valeur de l'ordre de 15°.

4. Vis selon l'une des revendications 1 à 3, caractérisée en ce que la ou chaque nervure (24) se termine au niveau de la jonction (25) entre la partie de tige (20) et la pointe (22).

5. Vis selon l'une des revendications 1 à 3, caractérisée en ce que la ou chaque nervure (24) s'étend jusque dans la partie de tige (20) au-delà de la jonction (25) entre la partie de tige (20) et la pointe (21).

6. Vis selon l'une des revendications 1 à 5, caractérisée en ce que la nervure (24) tourne à gauche.

7. Vis selon l'une des revendications 1 à 6, caractérisée en ce qu'un nombre de nervures (24) compris entre deux et huit sont disposées en étant réparties uniformément sur la périphérie.

8. Vis selon l'une des revendications 1 à 7, caractérisée en ce que la nervure (24) possède une section transversale dissymétrique, le flanc de la nervure possédant un angle de flanc plus pentu (15) dans la direction dans laquelle elle tourne.

9. Vis selon l'une des revendications 1 à 8, caractérisée en ce que l'angle de pas (4) du filetage (21) est situé dans la gamme comprise entre 16° et 20° et est égal de préférence à environ 19°.

10. Vis selon l'une des revendications 1 à 9, caractérisée en ce qu'au moins une autre nervure (24') comportant une arête de coupe (23') est prévue sur la partie terminale du filetage en direction d'une partie (19) de la tige ne portant pas de filetage.

11. Vis selon la revendication 10, caractérisée en ce que l'autre nervure (24') possède la même configuration et le même angle d'inclinaison (13) que la nervure (24) dans la zone de la pointe.

12. Vis selon la revendication 10 ou 11, caractérisée en ce que le diamètre (12') de l'autre nervure (24') est supérieur au diamètre (12) de la nervure (24) dans la zone de la pointe.
